Europäisches Patentamt

European Patent Office

Office européen des brevets

(11) Publication number: **0 456 929 A2**

# EUROPEAN PATENT APPLICATION

(21) Application number: 90305808.9

(22) Date of filing: 29.05.90

(51) Int. Cl.⁵: **C08L 67/00**, B65D 65/38,
//(C08L67/00,23:20)

(30) Priority: 14.05.90 JP 121106/90

(43) Date of publication of application:
21.11.91 Bulletin 91/47

(84) Designated Contracting States:
DE FR GB IT

(71) Applicant: SHISEIDO COMPANY LIMITED
5-5 Ginza 7-chome
Chuo-ku Tokyo(JP)

(72) Inventor: Odate, Ryoji, c/o Shiseido
Laboratories
1050 Nippa Cho, Kohoku-ku
Yokohama City, Kanagawa Pref.(JP)
Inventor: Haga, Tomoyuki, c/o Shiseido
Laboratories
1050 Nippa Cho, Kohoku-ku
Yokohama City, Kanagawa Pref.(JP)
Inventor: Kimura, Hiroyuki, c/o Shiseido
Laboratories
1050 Nippa Cho, Kohoku-ku
Yokohama City, Kanagawa Pref.(JP)

(74) Representative: Wharton, Peter Robert et al
Urquhart-Dykes & Lord Alliance House 29-31
Kirkgate
Bradford West Yorkshire, BD1 1QB(GB)

(54) A semitransparent resin container having pearl gray glossiness.

(57) The present invention discloses a semitransparent resin container having pearl gray glossiness made of thermoplastic resins prepared by adding 0.01 to 0.9 weight/percent of polymethy pentene to 99.99 weight/percent of polyester resins and further said thermoplastic resins are subjected to biaxial orientation blow molding after molding of preformation. Thus, pearl gray glossiness of a container can be improved and further the strength of said container can also be improved.

EP 0 456 929 A2

The present invention relates to a semitransparent resin, container having pear gray glossiness ; and more particularly relates to a semitransparent resin container used for a container giving prominance to appearance for receiving cosmetics, shampoo, rinse, food stuffs, medical supplies etc thereinto.

Hitherto, it has been conventional to apply beautiful pearl gray glossiness onto a container giving prominance to appearance. As one of the methods of giving pearl gray, glossiness, it was generally performed to apply a colour former of pear gray glossiness such as guanine of a scale, talc powder, various kinds of plumbates,micas,titanium nacrolacquer etc in the shape of a plate onto the surface of an objective body as paints or to knead thereinto.

As another method, as disclosed in Japanese patent publication No.31467/1971, thermoplastic resin composition having pearl gray glossiness consisting of 5 - 94 wt./% of polyacrylic resins, 0.5 - 70 wt. / % of saturated aliphatic polyolefin resins and 5 - 94 wt. / % of polystyrene resins or aromatic polyester resins was known.

Furthermore, as disclosed in Japanese patent publication No.39336/1986, a resin container having metallic glossiness made of resin composition consisting of 10 - 99 wt. / % of polyester resin and 1-90 wt. / % of polyolefin resin and further providing with thinned portions of a container oriented at least to a certain one direction, was also known.

Still furthermore, as disclosed in Japanese patent publication No.58974/1987 , a hollow polyester container having frosted pearl gray glossiness made of resin composition, wherein at least one kind selected from the group consisiting of methacrylic resins, saturated aliphatic polyolefin resins and styrene resins is blended into thermoplastic polyester resins having 0.75 - 1.40 of intrinsic viscosity and also having main monomer unit of ethylene phthalate and said resin composition is subjected to biaxial orientation blow molding and further subjected to mat molding, was also known.

However, such a conventional method of applying or kneading a colour former of pearl gray glossiness has such defects that said colour former manifests pearl gray glossiness due to the existence thereof at the surface of a container ; and accordingly it was impossible to obtain deep pearl gray glossiness and further the cost was expensive because of high cost of the colour former of powdered pearls.

Furthermore, according to the conventional methods, much of resins other than polyester resin are blended and as a result, there was a problem of inferiority such as the moldability of preformation and the generation of thickness inclination at the time of blow molding thereafter.

With the above in mind, an object of the present invention is to provide a semitransparent resin container having pearl gray glossiness in order to settle the aforementioned defects.

The object can be achieved by a semitransparent resin container according to the present invention comprising :
a container made of thermoplastic resin, wherein said thermoplastic resin is a composition prepared by adding 0.01 - 0.9 wt. / % of polymethyl pentene to 99.1-99.99 wt./% of polyester resins and further said composition is subjected to biaxial orientation blow molding after the molding of preformation.

According to the present invention, since a small quantity of polymethypentene added to polyester resins, it becomes possible to improve pearl gray glossiness and further to improve the strength of an obtainable container by orienting polymethylpentene to biaxial direction by means of biaxial orientation blow molding in order to settle insufficiency of pear gray glossiness ascribable to a small addition of polymethylepentene, while maintaining an excellent physical property, moldability and penetrability of polyester resins.

Fig. 1 is a graph showing a compounding quantity of polyolefin and a degree of pearl gray glossiness.

Fig. 2 is a graph wherein the compounding quantity of polyolefin in Fig. 1 is less than 0.5 %.

The polyester resin according to the present invention is polyester resin employed in a conventional biaxial orientation blow molding and polyethelenterephthalte is most important. As one part of a component of terephthalic acid, on the other hand, for example, aromatic dicarboxylic acid such as isophthalic acid ,naphthalendicarboxylic acid, diphenyldicarboxylic acid, diphenoxyethanedicarboxylic acid, diphenyletherdicarboxylic acid, diphenylesulfonedicarboxylic acid etc; alicyclic dicarboxylic acid such as hexahydroisophthalic acid, hexahydroterephthalic acid etc; aliphaticdicarboxylic acid such as adipic acid,sebacic acid, azelaic acid etc; bifunctional carboxylic acid such as the other other bifunctional carboxylic acid of hydroxy acid etc as p-$\beta$ -hydroxyethoxybenzoic acid or $\epsilon$ - oxycaproic acid may be exemplified as one part of a component of terephthalic acid and/or, as one part of a component of ethylene glycol, for example , the glycol such as trimethylene glycol,tetramethylene glycol, hexamethylene glycol, decamethylene glycol, neopentylene glycol, diethylene glycol, triethylene glycol, 1.1-cyclohexanedimethylol, 1.4-cyclohcxanedimethylol, 2.2-bis( 4-$\beta$-hydroxyethoxyphenyl) propane or bis(4- $\beta$ - hydroxyphenyl) sulfone etc may be exemplified and one kind and more of multifunctional compounds such as the aforementioned functional delivertives copolimerized in a scope less than 20 mol % may also be employed.

2

As the polyester resin according to the present invention, polyester resins being available for biaxial orientation blow molding can be employed and polyethyleneterephthalate is most suitable.

Polyethylpentene according to the present invention, it is TPX on market and is polyolefin having base of 4-methyl-pentene 1.

Prototype Testing 1

Polyester resin

UNIPET RT-513

Japan Unipet Co.,Ltd.

Molding machine

Biaxial orientation blow molding machine ASD 50 EX

Niseijushi Kogyo Co.,Ltd.

By employing the above resin and machine, the polyester resin was blended as shown in Table 1. After perfreming 975 ml of a container, it was subjected to biaxial orientation blow molding. The container thus molded was observed as follows :

Moldability :

Observation was made on thickness inclination expansion of parisone etc.

Pearl gray glossiness :

Observation was made on on pearl gray glossiness of a container.

## Table 1

| Item Addition(wt./%) Name of resin | | Moldability | | | Pearl gray glossiness | | |
|---|---|---|---|---|---|---|---|
| | | 0.5 | 3 | 10 | 0.5 | 3 | 10 |
| 1 | TPX | ○ | △ | X | ○ | ○ | ○ |
| 2 | PP | ○ | △ | XX | X | △ | ○ |
| 3 | HDPE | ○ | XX | XX | X | △ | △ |
| 4 | LDPE | ○ | X | XX | X | △ | ○ |
| 5 | LLDPE | ○ | X | XX | X | △ | ○ |
| 6 | EVA | ○ | ○ | X | X | △ | ○ |
| 7 | PMMA | ○ | △ | X | X | △ | ○ |

```
Note :    1. TPX   : MX-002   Mitsui Petrochemical Industries,Ltd.
          2. PP    : Chisso K-7011  Chisso Corporation
          3. HDPE  : SHOLEX 5003    Showa Denko K.K.
          4. LDPE  : SUMIKATHENE F412-1 Sumitomo Chemical Co.,Ltd.
          5. LLDPE : ULTZEX 352DL  Mitsui Petrochemical Industires,
                                   Ltd.
          6. EVA   : EVAFLEX P2505  Mitsui Dupont Chemical Co.,Ltd.
          7. PMMA  : PARAPET G.1000 Kyowa Gas Chemical Co.,Ltd.
```

Valuation :

O      good      △   slightly good      X   inferior

XX      considerably inferior

From the above valuation shown in Table 1, it can be understood that the moldability in the addition of 0.5 wt./5 reveals a good result and pearl gray glossiness can be observed only on TPX.

Next, 88ml of a container was made by means of a mass production model of biaxial orientation blow molding for PET, Table 2 shows the valuation of pearl gray glossiness of the molded container added TPX as shown in said Table 2.

Table  2

| TPX Content wt./% | Pearl gray glossiness | Sense of high grade | Synthetic valuation on appearance |
|---|---|---|---|
| 1.0 | ◎ | X | X |
| 0.9 | O | O | O |
| 0.8 | O | O | O |
| 0.6 | O | O | O |
| 0.5 | O | O | O |
| 0.2 | O | O | O |
| 0.10 | O | O | O |
| 0.05 | O | O | O |
| 0.02 | O | O | O |
| 0.01 | O | O | O |
| 0.009 | X | △ | X |
| 0.005 | X | X | X |

Valuation :

| Pearl gray glossiness | Sense of high grade | Synthetic valuation |
|---|---|---|
| ◎ excellent | O good | O good |
| O good | △ slightly good | X inferior |
| X inferior | X inferior | |

From the Table, pearl gray glossiness having the sense of high grade can be obtained by addition of 0.01-0.9 wt./% of TPX.

When the addition of TPX is 1.0wt./%, the sense of high grade is not satisfactory due to excess glare and insufficiency of penetrability of pearl gray glossiness.

Table 3 shows the data of measured light permiability of the prototype testing containers molded shown in Table 1 and Table 2 and the other molded containers wherein the other resins are added.

Measuring apparatus :

304 Type manufactured by Hitachi,Limited
Automatic recording spectrophotometer
Measuring wave length : 800 nm

## Table 3

### Each compounding resin and light permeability

Thickness 0.5mm     Wave length

| Compounding resin<br>Compounding | TPX | PP | HDPE | LDPE | LIDPE | PMMA |
|---|---|---|---|---|---|---|
| 10.00 % | 0 % | 0 | 2.57 | 0.62 | 0.54 | 2.66 |
| 3.00 | 0 | 2.42 | 23.46 | 22.17 | 27.10 | 19.41 |
| 1.00 | 0.005 | | | | | |
| 0.82 | 0.047 | | | | | |
| 0.62 | 0.26 | | | | | |
| 0.52 | 0.109 | 60.36 | 61.5 | 70.75 | 69.3 | 59.22 |
| 0.42 | 0.73 | | | | | |
| 0.11 | 41.6 | | | | | |
| 0.05 | 59.22 | | | | | |
| 0.025 | 78.84 | | | | | |
| 0.01 | 83.17 | | | | | |
| 0.00 | 88.3 | | | | | |

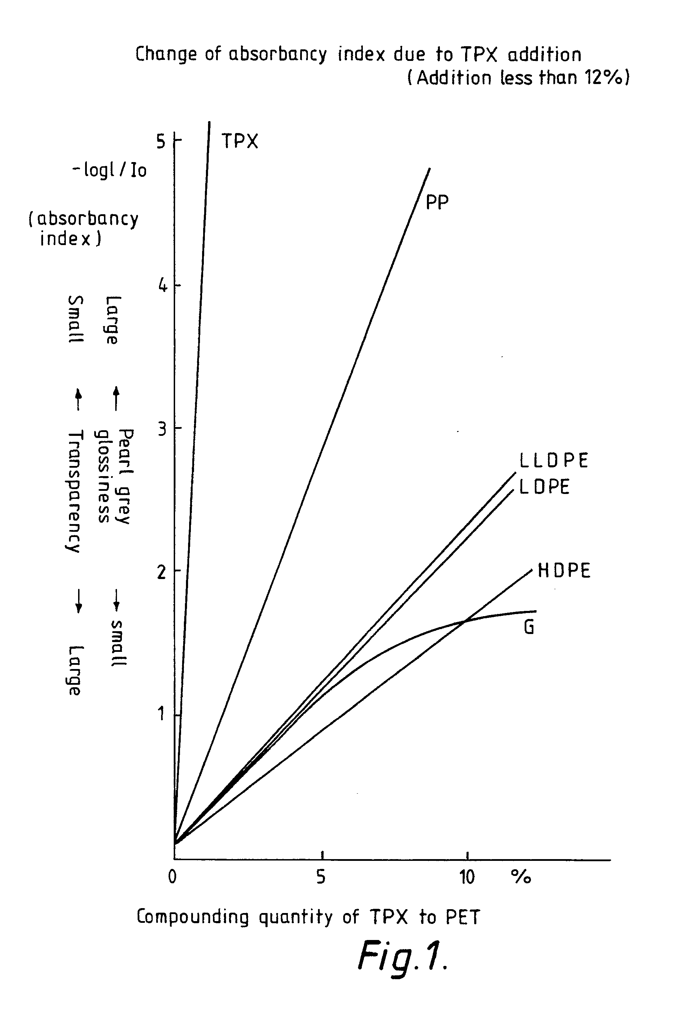

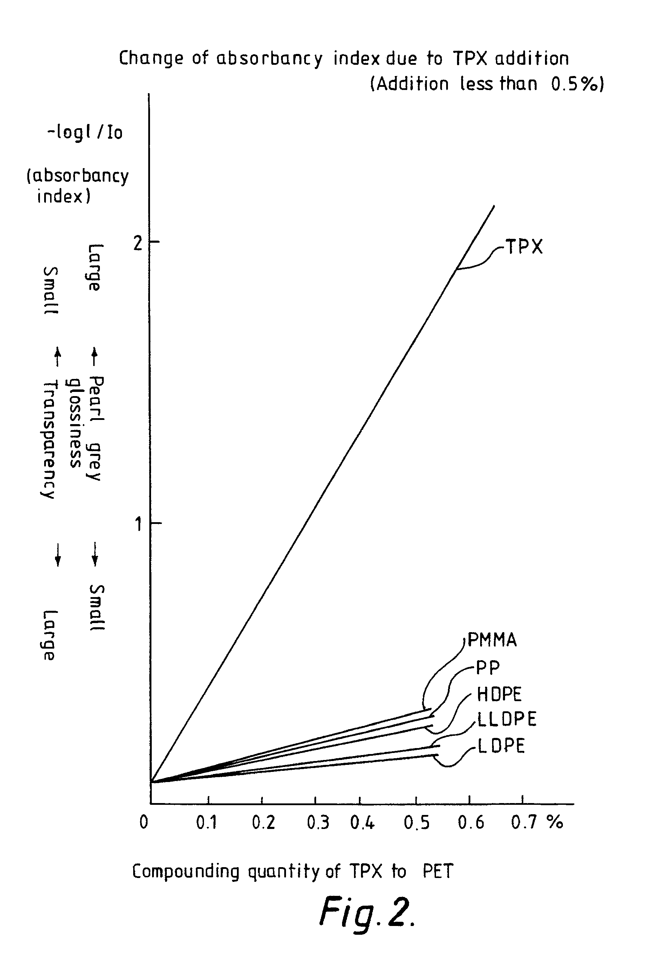

From the above Table 3, the graphes shown in Fig. 1 and Fig. 2 can be illustrated on absorbancy index by employing light permeability based on Lambert Beer Principle.

$$- \log \frac{I}{I_o} = -\log T = At = \tau b$$

$I_o$ ;  light strength before permeation
$I$ ;  light strength after permeation
$T$ ;  permeation ratio
$At$ ;  absorbancy index
$\tau$ ;  turbidity index
$b$ ;  thickness

Next, under consideration of the correlationship between pearl gray glossiness of a container and absorbancy index of each polyolefin resin, compounding quantity of polyolefin resin and degree and penetrability of pearl gray glossiness are shown in Fig. 1 and Fig. 2 , respectively.

From Table 3, Fig. 1 and Fig. 2, a container wherein polyolefin resins or polymethylmethacrylate is added has the light permeability larger than that of a container wherein TPX is added and a considerable much addition of the resin is necessary to obtain pearl gray glossiness equal to that of the container wherein TPX is added.

Polymethylpentene shows pearl gray glossiness in the extreamely small addition thereof (0.01 wt./% and more).

However, a container wherein 1.0wt./% of polymethylpentene is added shows excess glare of pearl gray glossiness and further lacks penetrability ; and therefore said container is insufficient in the sense of high grade and further the contents within a container can not be seen from the outside when the contents are filled therein.

Regarding polyolefin resins same as polymethylpentene , such as polypropylene, soft polythethlene, hard polyethylene or polymethylmethacrylate, pearl gray glossiness can little be observed by the addition of 3 wt./% thereof.

However, thickness inclination is apt to generate due to said 3 wt./% addition, resulting in a considerably inferior moldability.

Furthermore, the following Table 4 shows the valuation on appearance of 880ml of prototype testing container with 0.5 mm of thickness wherein the contents are received and further on easiness to see said contents from the outside and also on the addition of TPX.

Easiness to see the contents from the outside :

Observation was made on the easiness to see the contents from the outside of the container and further on the penetrability and appearance thereof, wherein coloured shampoo or rinse is filled therein.

### Table 4

| TPX content wt./% | Easiness to see the contents | Appearance on a container wherein the contents are received | Synthetic valuation on a container wherein the contents are received |
|---|---|---|---|
| 1.5 | X | X | X |
| 1.0 | △ | X | X |
| 0.9 | ○ | △ | ○ |
| 0.8 | ○ | ○ | ○ |

| | Easiness to see the contents | Beautifulness wherein the contents are received | Synthetic valuation |
|---|---|---|---|
| 0.6 | O | ◎ | O |
| 0.5 | O | ◎ | O |
| 0.3 | O | O | O |
| 0.2 | O | O | O |
| 0.10 | O | O | O |
| 0.05 | ◎ | O | O |
| 0.02 | ◎ | O | O |
| 0.01 | ◎ | △ | O |
| 0.009 | ◎ | X | X |
| 0.005 | ◎ | X | X |

Valuation :

| Easiness to see the contents | Beautifulness wherein the contents are received | Synthetic valuation |
|---|---|---|
| ◎ excellent | ◎ excellent | O good |
| O good | O good | X inferior |
| △ slightly good | △ slightly good | |
| X inferior | X inferior | |

From the above, when polymethylpentene exceeds 0.9 wt./%, it can be observed that the contents are difficult to see through a container.

It is possible to obtain semitransparent pearl gray glossiness by the small addition of 0.01 wt./% to 0.9 wt./% of polymethylpentene and further due to the small addition a property of PET at the time of molding is hardly changed and has excellent moldability accordingly.

In the case of a container prepared by the addition of 0.01 wt./% of polymethylpentene, wherein coloured contents are received, a quantity employed can easily be recognized and the colour tone of said container is conspicuously and easily observed because of deep semitransparent pearl gray glossiness. Thus, the container has excellent appearance as a container for receiving cosmetics, shampoo, rinse etc.

As decsribed above, the semitransparent resin container according to the present invention has deep semitransparent pearl gray glossiness and further said container is semitransparent capable of seeing through the contents from the outside and therefore it is excellent in appearance of a product wherein the contents are filled and the nature or residual quantity of said contents can immediately be realized. Furthermore, due to small addition of resin to polyester resin, a property of said polyester resin can be maintained and further unique deep pearl gray glossiness having the sense of high grade compared with that of a conventional resin container containing expensive colour former as powdered pearl , can be obtained, thereby reducing a manufacturing cost.

## Claims

1. A semitransparent resin container made of thermoplastic resin having pear gray glossiness comprising :
said thermoplastic resin being a composition prepared by adding 0.01 wt. / % to 0.9 wt. / % of polymethyl pentene to 99.1 wt. / % to 99.99 wt. / % of polyester and further said composition being subjected to biaxial orientation blow molding after the molding of preformation.

7

2. The semitransparent resin container according to claim 1, wherein a small quantiy of said polymethy pentene is added to polyester resin, thereby improving peal gray glossiness and further improving the strength of a container.

3. The semitransparent resin container according to claim 1, wherein any of said polyester resin available for biaxial orientation blow molding can be employed and further polyethylenterephthalate is most suitable.

4. The semitransparent resin container according to claim 1, wherein , as one part of a component of terephthalic acid of said polyester resin , aromatic dicarboxylic acid, aliphatic dicarboxylic acid respectively specified in the specification and the other bifunctional carboxylic acids also specified in the specification and , as one part of a composition of ethylene glycol, the others glycols specified in the specification may respectively be employed.

5. The semitransparent resin container according to claim 4, wherein one kind and more of multifunctional compounds of functional derivatives as claimed in claim 4 which are copolymerized in a scope less than 20 % mol may also be employed.

Change of absorbancy index due to TPX addition
(Addition less than 12%)

Fig.1.

Change of absorbancy index due to TPX addition
(Addition less than 0.5%)

Fig.2.